# EUROPEAN PATENT SPECIFICATION

(11) **EP 0 887 002 B1**
(45) Date of publication and mention of the grant of the patent: **04.02.2009**
(21) Application number: 98304976.8
(22) Date of filing: 24.06.1998
(51) Int. Cl.: A01B 27/00, A01B 49/02

(54) **Press cultivator**
Packerkultivator
Cultivateur compacteur

(30) Priority: 26.06.1997 GB 9713398; 24.12.1997 GB 9727177; 08.04.1998 GB 9807408
(43) Date of publication of application: 30.12.1998
(60) Divisional application: 05076868.8
(73) Proprietor: Simba International Limited, Sleaford, Lincolnshire NG34 7EW (GB)
(72) Inventor: Wright, Philip John, Boston PE21 7EX Lincolnshire (GB); Hartley, Adrian Richard, Grantham NG31 7GT Lincolnshire (GB)
(74) Representative: Croston, David

(56) References cited:
- EP-A- 0 761 078
- DE-A- 1 945 404
- DE-A- 2 030 448
- DE-A- 2 818 274
- DE-A- 3 038 439
- DE-C- 66 478
- DE-U- 8 913 171
- GB-A- 2 084 441

## Description

The invention relates to improved press cultivators for breaking down and consolidating soil for cultivation (see eg. DE-A-2818274).

Press cultivators are conventionally used for breaking down and consolidating ploughed ground prior to sowing with seed. Such press cultivators conventionally comprise one or more rows of press rings which consolidate and slice the clods remaining from ploughing, facilitating the subsequent weathering effects and enabling the soil to be broken into a seed bed more easily. The benefit of a firmed soil profile after disturbance by plough or disc is to make subsequent trafficking and cultivation easier and more effective, as the soil profile will accept water more effectively by improved capillary action and, furthermore, if conditions are dry moisture is more likely to be retained.

The known addition of leading tines helps the press rings by working the soil surface (especially a baked out surface) and the tilth formed can then be consolidated by the press rings, thus producing a better firmed profile.

With conventional press cultivators, clods left from ploughing or discing, or which have been exposed by tines attached to the press cultivator inhibit the effectiveness of the press rings. This results in a loose, uneven profile. Ridges of loose clods may result in blockages between individual press rings or between rows of press rings. Furthermore, if the clods are very loose, the crushing effect of the press rings is reduced thereby reducing the overall cultivating and consolidating (clod crushing) effect. This effect is especially noticeable in the front row of two or more rows of press rings.

The present invention as claimed provides one or more levelling boards positioned ahead of the press rings to crush or slice clods and consolidate the profile of the soil. In this way the cultivating and consolidating effect of the press cultivator can be significantly improved.

Presently available press cultivators utilise spoked cast iron press rings which are heavy and prone to wear and require belleville washers to be positioned upon the cultivator axles either side of the press rings. Additionally press cultivators fitted with such rings require regular maintenance to ensure the rings are held tight to the axle upon which they are mounted and thus do not rotate relative to one another.

Accordingly, the present invention as claimed provides a press cultivator comprising a chassis, one or more rows of press rings mounted upon the chassis, and one or more levelling boards ahead of the press rings. One or more rows of tines may also be mounted ahead of the levelling boards.

Preferably, two rows of press rings are mounted upon the chassis. The adjacent rows of press rings may be offset relative to one another.

In an especially preferred embodiment the adjacent rows of press rings intermesh so that the trailing row of press rings ensures that large clods trapped between the rings are reduced in size.

Preferably, the levelling boards are in the form of one or more rows; separate rigid or resilient boards may be provided. Each levelling board is preferably in the form of a leaf spring. Where one or more rows of separate levelling boards are used, they are arranged so that the individual elements are positioned ahead of the usual gap between each of the following press rings. This reduces the number of loose clods moving between the following row of press rings, and thus reduces the frequency of blockages occurring between individual press rings.

The or each levelling board may act by compacting the cultivated soil ahead of the press ring. The or each levelling board may additionally or independently comprise a leading edge which cuts exposed clods before they contact the press rings. The two effects may be combined in a single kind of levelling board.

The height of the levelling board may be adjusted either manually or hydraulically to enable the press cultivator to be used with a variety of soil types and in a variety of conditions. Furthermore, the approach angle of levelling board compared with the surface of the soil may also be adjustable.

The cultivator may include tines which may be sprung or rigid, and which may also be adjusted with respect to the level of the soil either manually or hydraulically. Different tips may be attached to the tines so that they can be used with a variety of soils and field conditions. Preferably, the tines have a negative rake angle such that the tip of each tine is closer to the press rings than the remainder of the tines. This allows the soil to be moved with a minimum of upward heave and reduces the creation of exposed clods ahead of the levelling boards and press rings.

Each row of press rings, levelling boards, and tines (if provided) may be mounted so that they are substantially perpendicular to the direction of travel of the press cultivator when in use. Alternatively, they may be mounted at an angle, for example 45°, to the direction of travel.

The chassis of the press cultivator may be foldable for ease of transportation.

The chassis of the press cultivator may also be provided with one or more wheels for transportation purposes. A pair of wheels may be provided. Preferably, the wheels are moveable from a first position, in which the press rings and levelling boards are raised above ground level, to a second position in which the press rings are in their operating position in contact with the ground and the wheels are raised above ground level. Preferably, this movement is by hydraulic actuator to enable it to be undertaken without a tractor driver moving from his cab. The chassis of the press cultivator may be attached to a draw bar for connecting the press cultivator to a tractor. The draw bar may be hydraulically controllable to enable the cultivator to be tilted rearwardly, thus raising the levelling boards and tines clear of the soil, so that the weight of the press cultivator is supported on the rearmost row of press rings; this allows the press cultivator to be manoeuvred more easily.

Preferably, an end plate is mounted at the end of each row of levelling boards, or, where a single levelling board is used, at the end of the levelling board. This prevents the passage of soil beyond the width of the cultivator and prevents the flow of soil onto the previous pass.

The chassis of the press cultivator may also be provided with a rear draw bar which may be hydraulically adjustable to enable the machine to trail another implement, such as a "Cambridge roll". This extends the flexibility of the press cultivator and allows, for example, a seed bed to be prepared immediately.

Preferably, each press ring comprises two opposing dish-like members each having a substantially circular base and an outwardly curving peripheral wall, the members being located whereby the outer edges of the respective peripheral walls are adjacent so that the members together define a hollow disc with a peripheral edge.

According to a preferred embodiment of the present invention there is provided a press ring for an agricultural machine comprising two opposing dish-like members each having a substantially circular base and an outwardly curving peripheral wall, the members being located whereby the outer edges of the respective peripheral walls are adjacent so that the members together define a hollow disc with a peripheral edge. The agricultural machine may be a press cultivator.

This embodiment thus provides a press ring which is lighter than a conventional cast iron press ring and which can also provide a much greater effective width of pressing per ring. Press rings according to this embodiment of the present invention may also be retrofitted to existing press cultivators.

The two dish-like members are provided concave with respect to one another. Preferably the bases of the dish-like members have a centrally located hole to enable them to be mounted upon an axle of a press cultivator.

Multiple pairs of dish-like members defining press rings according to the present embodiment may, in use, be mounted upon an axle. The press rings may be secured upon the axle by conventional attachment means.

Preferably also the peripheral wall of each opposing dish-like member curves the same distance outwardly from each circular base and thus the peripheral edge is provided equidistant between the opposing circular bases.

In a preferred embodiment the dish-like members are made from a resiliently deformable material and thus, in use, a pair of dish-like members defining a press ring are able to deflect towards one another when subjected to an axial load and act as spring washers. The axial load may be supplied by clamping means and spacer means provided upon the axle upon which the press ring is mounted.

The invention will now be described by way of example only, with reference to the accompany drawings, in which:
Figure 1 shows a side view of a press cultivator according to the invention arranged in its operating position with press rings, levelling boards and tines in contact with the ground;
Figure 2 shows a close-up of the press rings, levelling board and tines of the device shown in Figure 1;
Figure 3 is a plan view of the press cultivator of Figure 2;
Figure 4 shows a rear view of the press cultivator of Figure 2;
Figure 5 shows an alternative alignment of the press cultivator according to the invention;
Figure 6 shows the press cultivator according to the invention arranged for headland turns;
Figure 7 shows a press cultivator according to the invention in its lifted position prior to folding;
Figure 8 shows a rear view of a press cultivator according to the invention in the folded condition:
Figure 9 shows a side view of a press cultivator according to the invention in the folded condition:
Fig 10 shows a longitudinal cross-sectional view of a pair of press cultivator axles carrying press rings according to an embodiment of the present invention;
Fig 11 shows a front view of the press rings and axles of Fig 10;
Fig 12 shows a cross- sectional view through the centre of a dish-like plate which forms half of a press ring accord-ing to an embodiment of the present invention; and
Fig 13 shows a plan view of the dish-like plate of Fig 12

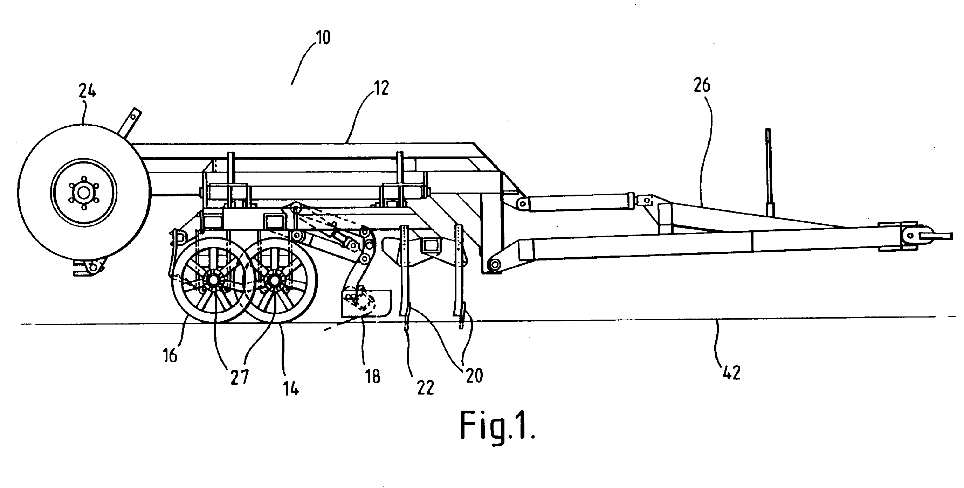

Figure 1 shows a side view of the press cultivator 10 comprising a chassis 12, a front row of press rings 14, a rear row of press rings 16, a levelling board 18, and two rows of rigid tines 20. The rigid tines are set at a negative angle to reduce upward heave of the soil and have removable tips 22. The chassis 12 also includes transportation wheels 24 and tow bar 26. The individual press rings of the embodiment shown are solid, spoked discs having a sharp outer rim for cutting the soil. Each press ring is mounted upon one of two parallel axles 27.

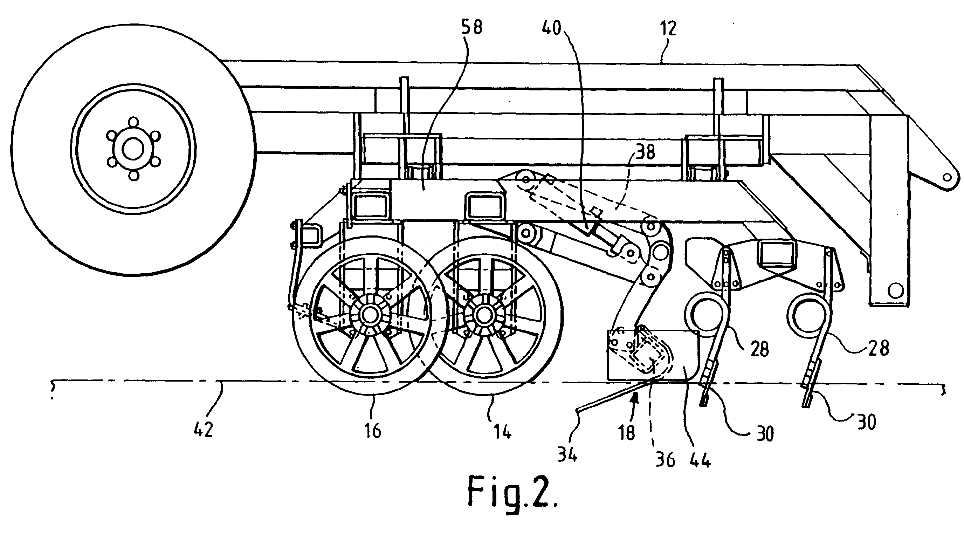

Figure 2 shows a close-up view of a press cultivator according to the invention. The rigid tines 20 of Figure 1 have been replaced by resilient tines 28. The resilient tines 28 have removable tips 30 which are again set at a negative angle. Other kinds of tine tips may be used to suit field conditions at the time of use.

Levelling board 18 comprises a leaf spring 34 attached to a beam 36. The levelling board 18 is connected to the chassis 12 by a parallelogram linkage 38 which is moveable by a hydraulic actuator 40. This enables the height of the levelling board 18 above ground level 42 to be varied from the seat of the tractor (not shown) to accommodate varying field conditions and to change the amount of soil carried ahead by the board 18 for levelling. The beam 36 may act directly to level the ground if the leaf spring elements 34 are compressed flat against the surface by hydraulic pressure acting through actuator 40.

The levelling board end plates 44 at each end of the row of levelling boards contain the soil, stopping flow beyond the machine width onto preceding passes over the field.

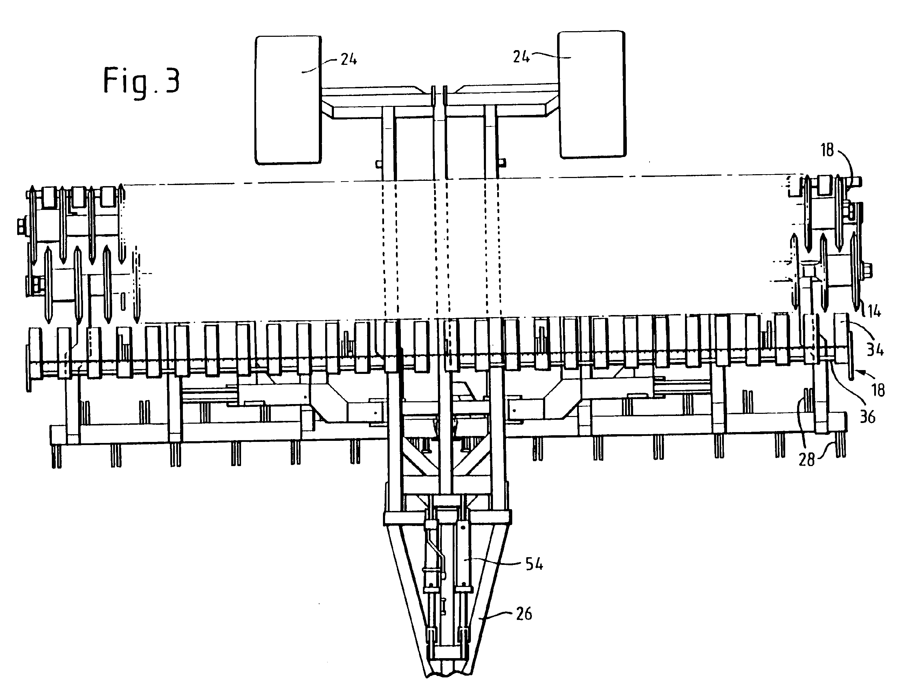

Figure 3 is a plan view of the press cultivator according to Figure 2. It shows that the front row 14 and rear row 16 of press rings are offset relative to one another. The levelling boards 18 comprise a beam 36 and depending springs 34; and are mounted on the chassis in front of the front row of press rings 14. Tines 23 are mounted in front of the levelling boards 18. The leaf springs 34 of a levelling board 18 are arranged so that they level and firm the profile ahead of a first row of press rings 14 in such a way that the unfirmed strips are hit by the first row of press rings 14 and any clod exposed by the tines 28 between the first row of press rings 14 will be firmed first by the leaf springs 34. This minimises the risk of loose clods passing between the press rings thus causing a blockage.

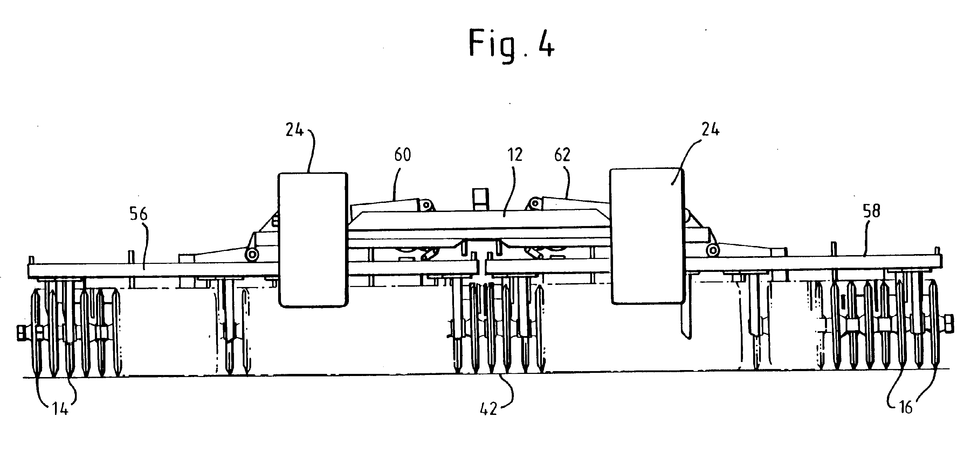

The rear view of the cultivator, as shown in Figure 4, also shows the offset nature of the two rows of press rings 14 and 16.

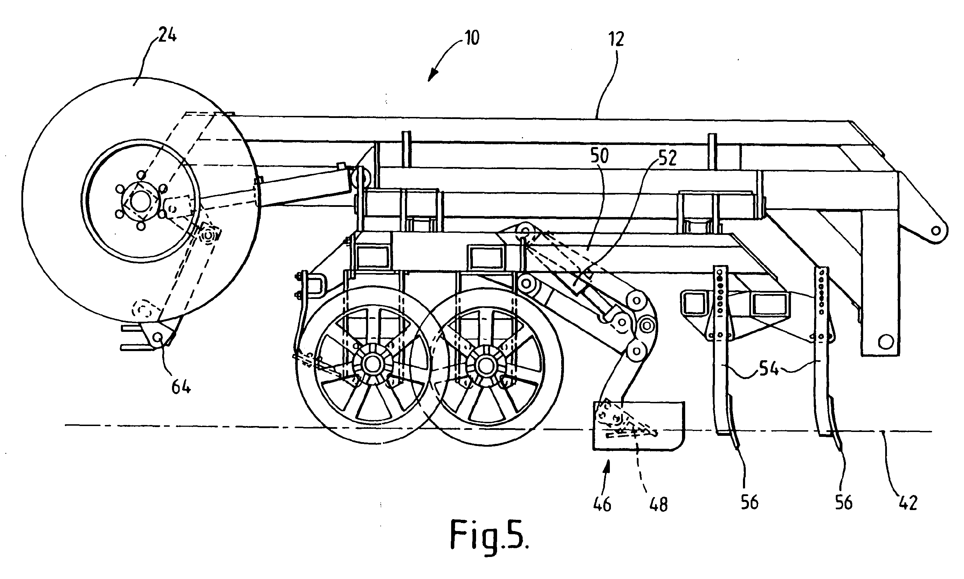

Figure 5 shows a side view of an alternative embodiment of a press cultivator 10. The levelling board 46 comprises a rigid beam 48 across the width of the press cultivator. The levelling board acts to cut and firm the profile of the soil and will consolidate the entire profile. This is especially suitable where the ground is very hard and cloddy. The height of the levelling board 46 above the soil 42 is adjustable by means of a parallelogram linkage 50 and hydraulically actuator 52. Figure 5 also shows height adjustable tines 54 with removable tips 56. The height of the tines can be adjusted manually to accommodate different fields conditions. Different rake angles can also be used to lift the soil profile head of the levelling board 46.

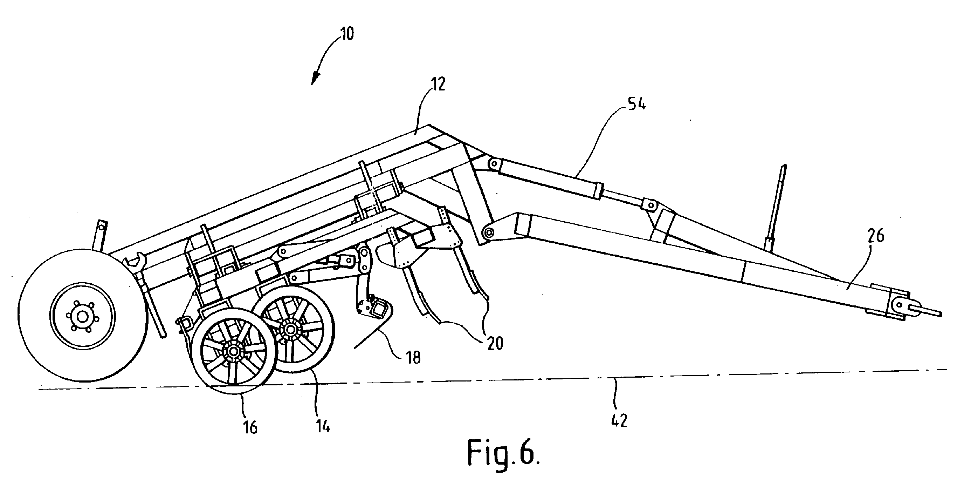

In use, the press cultivator according to the invention is towed by means of a tow-bar 26 attached by a conventional coupling to a suitable towing means, such as a tractor. In order to turn the press cultivator at the end of a path, the press cultivator is tilted on to its rear row of press rings 16 which is shown in Figure 6. This is achieved by means of hydraulic actuator 54 which acts upon the chassis 12 and the tow-bar 26. By tilting the cultivator on to the rear row of press rings, the tine 20 and levelling board 18 are lifted clear of the soil 42. This enables the press cultivator to be easily turned on to the next path.

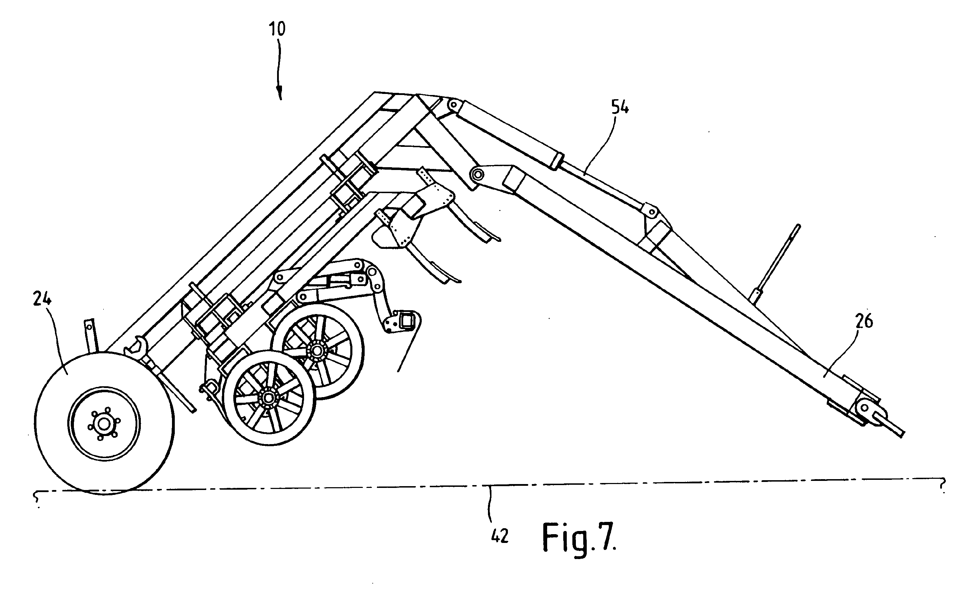

The width of the press cultivator, and hence the number of the press rings used, may be varied. Narrow width press cultivators may be transported simply by extending actuator 54 so that the frame tilts back on the wheels 24, thus enabling the press cultivator to be towed on the road by tow bar 26. This arrangement is shown in Figure 7.

If the width of the press cultivator is large, it may be desirable to divide the press cultivator into two or more sections. The rear view of the device as shown in Figure 4 shows that the two rows of press rolls 14, 16, levelling board 18 and tines 20 are mounted on two separate sub-chassis 56, 58 each of which are mounted upon the main chassis 12.

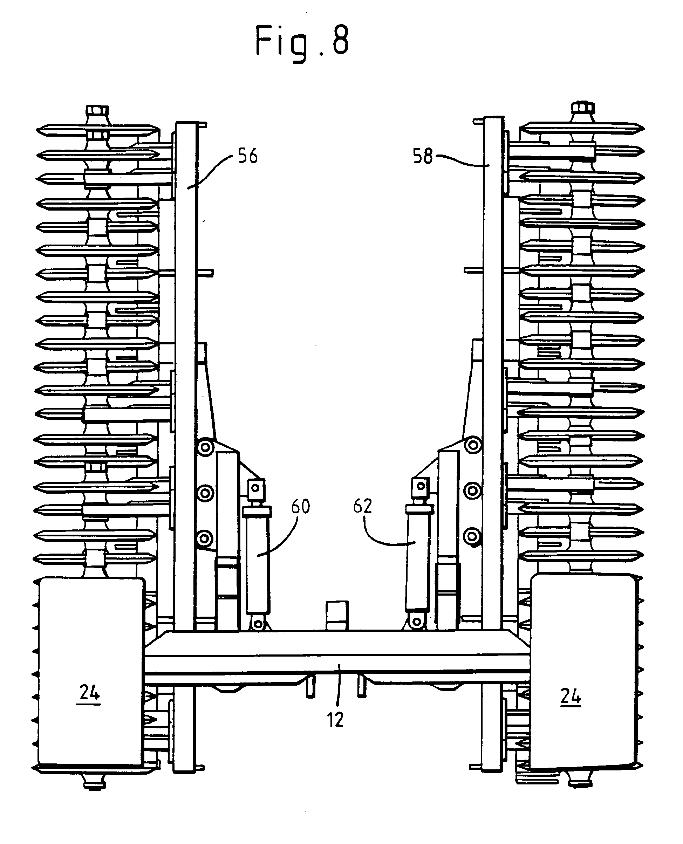

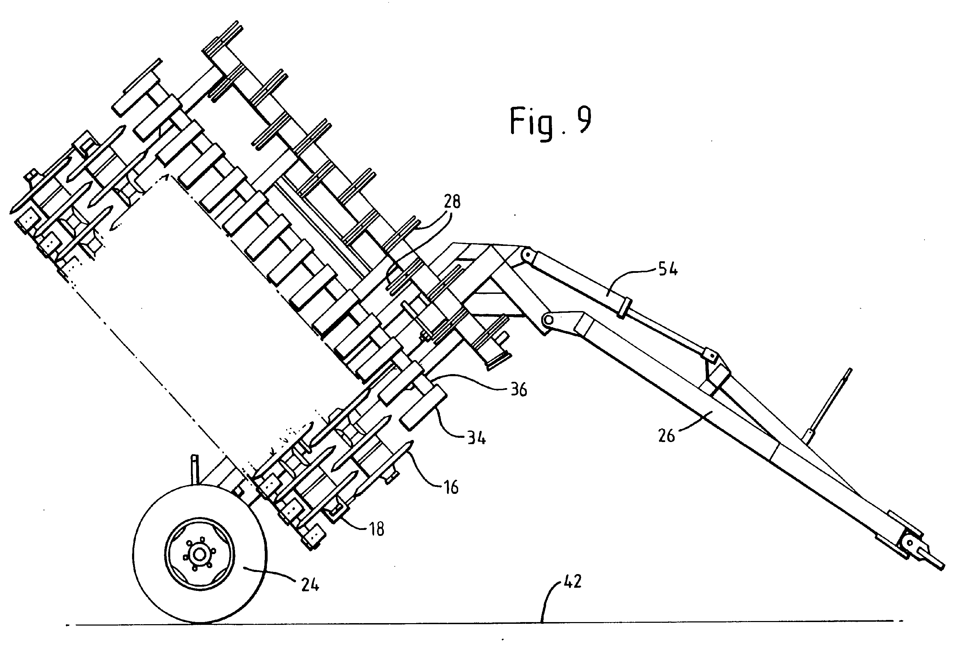

For transportation, the press cultivator is raised into a transport position by actuator 54, similar to that shown in Figure 7. The two separate sub-chassis 56 and 58 are raised into a folded position by hydraulic actuators 60 and 62, as shown in the rear view, Figure 8, and in the side view, Figure 9. this allows a vide press cultivator to be transported on road.

The press cultivator may be used alone, or in combination with a separate roller, such as a Cambridge roll or a coil. The chassis 12 may therefore be provided with a hydraulically actuatable tow bar 64 as shown in Figure 5.

Alternatively, a roller or a coil may be provided separately on the chassis or it may replace the rear most of press rings 16. One or both rows of press rings may be removable so that they can be replaced with, for example, rollers such as a Cambridge roll or a coil. This allows greater flexibility in use of the device.

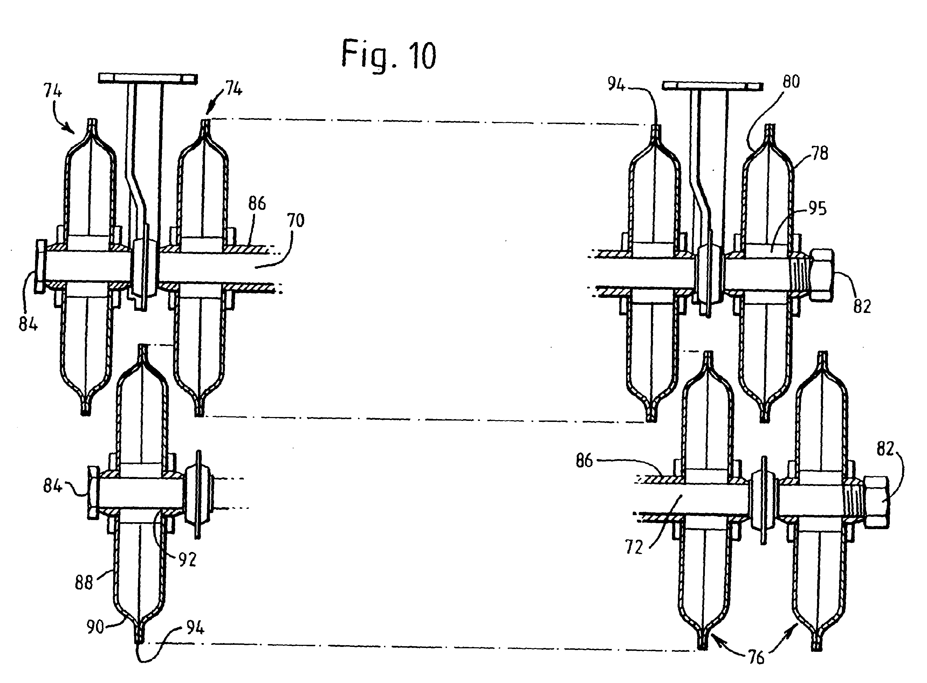

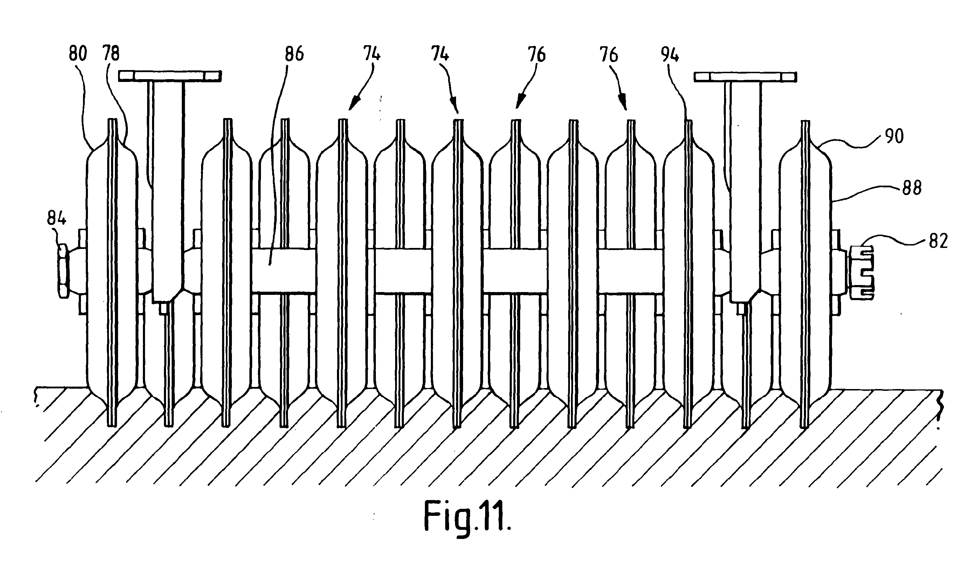

Referring to Figs 10 and 11 there are shown front and rear axles 70, 72 carrying respectively front and rear rows of press rings 74, 76. In use the axles 70, 72 would be rotatable within the chassis of a press cultivator (not shown) which in turn would be attached by a conventional coupling to a suitable towing means such as a tractor. The press cultivator may optionally include other features such as, for example, levelling boards and tines. Alternatively, not according to the invention a single row of press rings could be attached, for example, to the rear of a subsoiler in place of the conventional packer roller to provide a corrugated finish with all the advantages such a finish has over a flatter surface profile.

The individual press rings 74, 76 comprise a pair of concave dish-shaped plates 78, 80. Each pair of plates 78, 80 are mounted on their respective axle 70, 72 concave with respect to one another to form a hollow press ring. The plates 78, 80 each comprise a circular base 88 and a curving peripheral wall 90. A central hole 92 is provided in each plate 78, 80 in order that they can be carried by spacers 86 which are mounted on an axle 70, 72. Opposing pairs of plates 78, 80 are carried by the axle 70, 72 concave with respect to one another so as to provide a press ring 74, 76 comprising a hollow disc with a peripheral edge 94. The plates 78, 80 are clamped to the axles 78, 80 with conventional locking means 82, 84 and spacers 86. A central spacer 96 provided within and between adjacent plates 78, 80 is slightly narrower than the gap between the adjacent plates 78, 80. Thus as the locking means 82, 84 are tightened the bases 88 of the plates 78, 80 are deflected inward until they contact the spacer 96. This arrangement provides a clamping force which maintains axle tightness and allows for wear at the peripheral edge 94, which would otherwise lead to the rings 78, 80 loosening, to be taken up by the plates 78, 80 deflecting towards one another. The resilient nature of the plate material enables the plates 78, 30 to readily deflect and act as spring washers to maintain axle tightness.

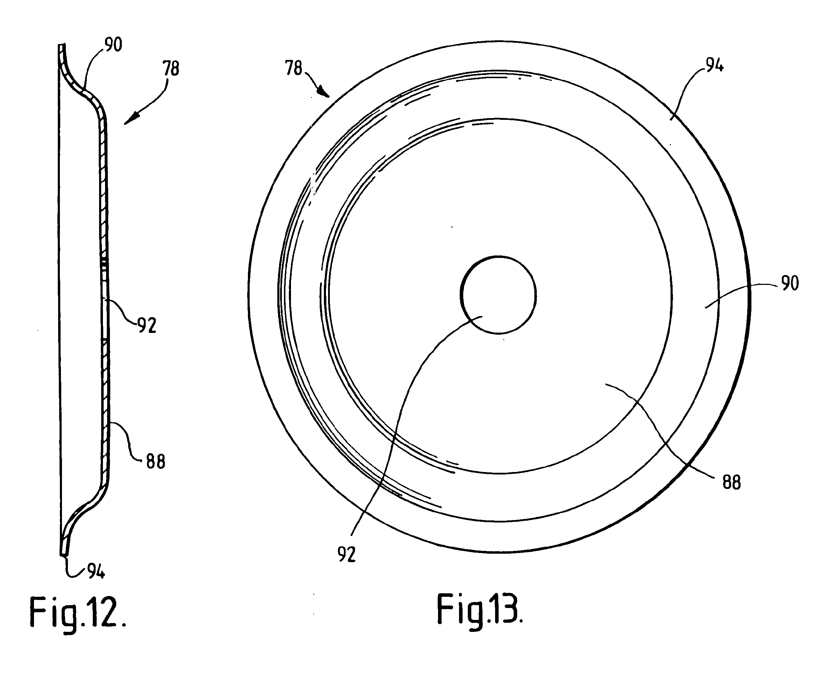

Figures 12 and 13 show a dish-like plate 78 forming one half of a press ring according to the present invention. In the embodiment of the plate 78 shown the base 88 is not parallel to the peripheral edge 94 but tapers slightly towards the central hole 92. This arrangement enhances the resilient nature of the plate 78.

The present invention provides the following advantages:
Reduced weight and significantly greater strength. A press cultivator fitted with rings, according to the present invention, will be able to work on lighter land without sinking too deep and will require less powerful towing means. A lighter format press can be used without ballast on lighter soils. Ballast can be added to such a press to enable effective operation in heavy conditions.

The corrugated surface profile formed by the press is more evenly consolidated across the full width of the axles, and is more resistant to soil erosion by run off down slopes where the land is cultivated on contour. As the press rings can have a far greater effective width of pressing the subsequent need to "Cambridge roll" the surface in certain applications can be eliminated. This gives a weatherproof corrugation wherein the crests dry out fast and rain drains through the troughs which, in practice, is drillable within 1 to 2 days following heavy rain. A flatter "Cambridge" profile retains moisture for longer which can delay drilling access by up to 10 to 14 days in severe cases.

The resulting surface profile is relatively evenly consolidated to promote volunteer and weed germination, and has up to twice the surface area of a flatter rolled surface to enable greater levels of seed germination.

As the press rings are hollow and are without spokes stone trappings and associated blockages are minimised.

## Claims

1. A press cultivator (10) comprising a chassis (12), a row of press rings (14) mounted upon an axle (27) carried by the chassis, and a ground engaging levelling board (18) positioned ahead of the press rings, the levelling board comprising a plurality of elements (34) spaced apart from one another **characterised in that** the plurality of levelling board elements (34) is arranged relative to the plurality of press rings (14) in such a way that individual elements of the levelling board are arranged ahead and in front of each of the spaces between the individual press rings (14) in such a way that unfirmed strips of ground are hit by the press rings (14), so as to minimise the risk of loose clods passing between the press rings (14).

2. A press cultivator according to claim 1 wherein the levelling board includes a leading edge adapted to cut clods of earth encountered, in use, by the levelling board.

3. A press cultivator according to claim 1 or 2 including means (38) to vary the position of the levelling board relative to the chassis.

4. A press cultivator according to claim 3 wherein the means to vary the position of the levelling board comprise a hydraulically actuated linkage (38, 40) connecting the levelling board to the chassis.

5. A press cultivator according to any of claims 1-4 wherein the levelling board elements are resilient.

6. A press cultivator according to claim 5 wherein the resilient elements comprise leaf springs (34).

7. A press cultivator according to any of claims 1-6 having two adjacent rows of press rings (14, 16).

8. A press cultivator according to claim 7 wherein the press rings of one row are offset relative to the press rings of the other row.

9. A press cultivator according to claim 8 wherein the press rings and rows are spaced such that the press rings of the adjacent rows intermesh.

10. A press cultivator according to any of claims 1-9 wherein the levelling board is provided with end plates (44).

## Patentansprüche

1. Presskultivator (10) mit einem Fahrgestell (12), einer Reihe von Pressringen (14), die an einer von dem Fahrgestell getragenen Achse (27) montiert sind, und einer Bodeneingriffsplanierplatte (18), die vor den Pressringen positioniert ist, wobei die Planierplatte eine Mehrzahl von Elementen (34) aufweist, die im Abstand voneinander angeordnet sind, **dadurch gekennzeichnet, dass** die Mehrzahl von Planierplattenelementen (34) relativ zu der Mehrzahl von Pressringen (14) derart angeordnet ist, dass einzelne Elemente der Planierplatte geradeaus und vor jedem der Abstände zwischen den einzelnen Pressringen (14) derart angeordnet sind, dass durch die Pressringe (14) unbeständige Bodenstreifen gegraben werden, so dass das Risiko des Passierens von lockeren Klumpen zwischen den Pressringen (14) minimiert wird.

2. Presskultivator nach Anspruch 1, wobei die Planierplatte einen vorlaufenden Rand aufweist, der dazu geeignet ist, die Erdklumpen zu schneiden, die bei der Benutzung auf die Planierplatte treffen.

3. Presskultivator nach Anspruch 1 oder 2, aufweisend Mittel (38) zum Variieren der Position der Planierplatte relativ zu dem Fahrgestell.

4. Presskultivator nach Anspruch 3, wobei die Mittel zum Variieren der Position der Planierplatte ein hydraulisch betätigtes Verbindungsstück (38, 40) umfassen, das die Planierplatte mit dem Fahrgestell verbindet.

5. Presskultivator nach einem der Ansprüche 1-4, wobei die Planierplattenelemente elastisch sind.

6. Presskultivator nach Anspruch 5, wobei die elastischen Elemente Blattfedern (34) umfassen.

7. Presskultivator nach einem der Ansprüche 1-6, aufweisend zwei benachbarte Reihen von Pressringen (14, 16).

8. Presskultivator nach Anspruch 7, wobei die Pressringe der einen Reihe relativ zu den Pressringen der anderen Reihe versetzt sind.

9. Presskultivator nach Anspruch 8, wobei die Pressringe und Reihen in Abstand voneinander derart angeordnet sind, dass die Pressringe der benachbarten Reihen ineinandergreifen.

10. Presskultivator nach einem der Ansprüche 1-9, wobei die Planierplatte mit Endplatten (44) versehen ist.

## Revendications

1. Rotoculteur émotteur (10) comprenant un châssis (12), une rangée d'anneaux d'émottage (14) installés sur un essieu (27) supporté par le châssis, et une rehausse de nivellement venant en prise avec le sol (18) positionnée en avant des anneaux d'émottage, la rehausse de nivellement comprenant une pluralité d'éléments (34) espacés entre eux, **caractérisé en ce que** la pluralité d'éléments de rehausse de nivellement (34) est disposée par rapport à la pluralité d'anneaux d'émottage (14) de telle façon que les éléments individuels de la rehausse de nivellement sont disposés en avant et face à chacun des espaces entre les anneaux d'émottage individuels (14) de sorte que les bandes de sol non stabilisées sont heurtées par les anneaux d'émottage (14), afin de minimiser le risque de mottes détachées passant entre les anneaux d'émottage (14).

2. Rotoculteur émotteur selon la revendication 1, dans lequel la rehausse de nivellement inclut un bord d'attaque conçu pour couper les mottes de terre rencontrées, en utilisation, par la rehausse de nivellement.

3. Rotoculteur émotteur selon la revendication 1 ou 2, incluant un moyen (38) pour faire varier la position de la rehausse de nivellement par rapport au châssis.

4. Rotoculteur émotteur selon la revendication 3, dans lequel le moyen pour faire varier la position de la rehausse de nivellement comprend une liaison actionnée de manière hydraulique (38, 40) reliant la rehausse de nivellement au châssis.

5. Rotoculteur émotteur selon l'une quelconque des revendications 1 à 4, dans lequel les éléments de la rehausse de nivellement sont résilients.

6. Rotoculteur émotteur selon la revendication 5, dans lequel les éléments résilients comprennent des ressorts à lame (34).

7. Rotoculteur émotteur selon l'une quelconque des revendications 1 à 6, ayant deux rangées adjacentes d'anneaux d'émottage (14, 16).

8. Rotoculteur émotteur selon la revendication 7, dans lequel les anneaux d'émottage d'une rangée sont décalés par rapport aux anneaux d'émottage de l'autre rangée.

9. Rotoculteur émotteur selon la revendication 8, dans lequel les anneaux d'émottage et les rangées sont espacés de telle sorte que les anneaux d'émottage des rangées adjacentes s'engrènent.

10. Rotoculteur émotteur selon l'une quelconque des revendications 1 à 9, dans lequel la rehausse de nivellement est munie de plaques d'extrémité (44).
